# DEMANDE DE BREVET EUROPEEN

(11) **EP 2 108 546 A1**
(43) Date de publication de la demande: **14.10.2009**
(21) Numéro de dépôt: 09157659.5
(22) Date de dépôt: 08.04.2009
(51) Int. Cl.: B60R 16/02

(54) **Gouttière pour câble et véhicule automobile comprenant une telle gouttière**

(30) Priorité: 09.04.2008 FR 0852375
(71) Demandeur: Peugeot Citroën Automobiles SA, 78140 Vélizy-Villacoublay (FR)
(72) Inventeur: Dufour, Régis, 91300, MASSY (FR); Melinand, Brice, Phlippe, 92190, MEUDON (FR)

(57) **Abrégé**

La gouttière comprend un premier tronçon rigide de gouttière (18), un second tronçon rigide de gouttière (22), et un tronçon flexible (24) reliant une première extrémité (26) du premier tronçon rigide (18) avec une seconde extrémité (28) du second tronçon rigide (22), le tronçon flexible (24) définissant une surface d'enveloppe (43) le long de laquelle le câble est destiné à s'étendre.

Lorsque le tronçon flexible (24) est incurvé pour replier les tronçons rigides (18, 22) l'un à côté de l'autre, le profil longitudinal de la surface d'enveloppe est dénué de pliure localisée et reste sensiblement dans le prolongement des tronçons rigides (18, 22) au niveau des jonctions avec les tronçons rigides (18, 22).

## Description

La présente invention concerne une gouttière articulée de guidage de câbles, en particulier pour le guidage de câbles coaxiaux dans un véhicule automobile.

Le document US-B2-6,534,713 décrit une gouttière articulée de guidage de câbles, du type comprenant un premier tronçon rigide de gouttière, un second tronçon rigide de gouttière, un tronçon flexible reliant une première extrémité du premier tronçon rigide avec une seconde extrémité du second tronçon rigide, le tronçon flexible définissant une surface d'enveloppe le long de laquelle le câble est destiné à s'étendre.

Or, dans un véhicule automobile, une gouttière peut atteindre une très grande longueur, ce qui la rend encombrante à transporter.

L'invention a pour but de proposer une gouttière pouvant être transportée facilement, y compris lorsqu'elle reçoit un faisceau de câbles.

A cet effet, l'invention a pour objet une gouttière du type précité, **caractérisée en ce que,** lorsque le tronçon flexible est incurvé pour replier les tronçons rigides l'un à côté de l'autre, le profil longitudinal de la surface d'enveloppe est dénué de pliure localisée et reste sensiblement dans le prolongement des tronçons rigides au niveau des jonctions avec les tronçons rigides .

Grâce à l'invention, la gouttière peut être transportée avec les deux tronçons rigides repliés l'un à côté de l'autre, sans que le câble ne soit abîmé.

Selon d'autres caractéristiques de l'invention :
- au niveau des jonctions, l'aire de matériau de la section de la gouttière du tronçon flexible est inférieure à l'aire de matériau de la section de la gouttière de chaque tronçon rigide ;
- ledit tronçon flexible est essentiellement constitué d'un matériau rigide ;
- le tronçon flexible comprend un côté ouvert de manière à n'entourer que partiellement le câble ;
- le tronçon flexible définit, sur toute sa longueur, une section transversale filiforme qui ne présente pas de rupture de ligne ;
- le tronçon flexible est essentiellement constitué d'une bande flexible ;
- le tronçon flexible comprend des ondulations ;
- les ondulations sont inclinées, par rapport à la longueur du tronçon flexible ;
- les ondulations se succèdent dans le sens de la longueur dudit tronçon flexible ;
- lorsque le tronçon flexible n'est pas fléchi, les tronçons rigides sont dans le prolongement l'un de l'autre ;
- le tronçon flexible est venu de matière avec les premier et second tronçons rigides ;
- le tronçon flexible est une pièce distincte des premier et second tronçons rigides, cette pièce distincte étant rapportée et fixée sur les premier et second tronçons rigides ;
- les premier et second tronçons rigides ont un profil en coupe transversale en forme de U ; et
- les tronçons rigides ont chacun un côté ouvert.

L'invention a en outre pour objet un véhicule automobile **caractérisé en ce qu**'il comprend :
- une surface rigide, notamment un plancher d'assise arrière destiné à recevoir des sièges arrière de passager,
- une gouttière selon l'invention, rapportée et fixée sur ladite surface, avec le côté ouvert des tronçons rigides contre cette surface, et
- un faisceau de câbles guidés par la gouttière.

L'invention a en outre pour objet un procédé de fixation d'une gouttière sur un plancher d'assise arrière d'un véhicule automobile, **caractérisé en ce qu**'il comprend :
- le déploiement de la gouttière depuis une position où les tronçons rigides sont repliés l'un sur l'autre, jusqu'à une position déployée,
- le positionnement de la gouttière en position déployée sur le plancher d'assise arrière.

Selon d'autres caractéristiques de l'invention :
- le procédé comprend : le déploiement de la gouttière depuis une position où les tronçons rigides sont repliés l'un sur l'autre, jusqu'à une position déployée ; le positionnement de la gouttière en position déployée sur le plancher d'assise arrière ; la fixation de la gouttière positionnée, sur le plancher d'assise arrière,
- la fixation de la gouttière positionnée comprend la fixation des tronçons rigides en au moins deux points de fixation, et
- la fixation de la gouttière est réalisée à l'extérieur du passage du câble défini par les tronçons rigides et le tronçon flexible.

L'invention va à présent être expliquée à l'aide de la description qui va suivre. Cette description est donnée uniquement à titre d'exemple non limitatif et fait référence aux dessins annexés, parmi lesquels :
- la figure 1 est une vue en trois dimensions d'un plancher d'assise arrière d'un véhicule automobile, comprenant une gouttière pour câbles électriques ;
- les figures 2 et 3 sont des vues en trois dimensions d'une partie de liaison de la gouttière de la figure 1, respectivement par-dessus et par-dessous ;
- la figure 4 est une vue en trois dimensions de la gouttière seule, lorsque la gouttière est pliée en deux ;
- les figures 5 et 6 sont des vues similaires aux vues 1 et 2, représentant un second mode de réalisation de l'invention.

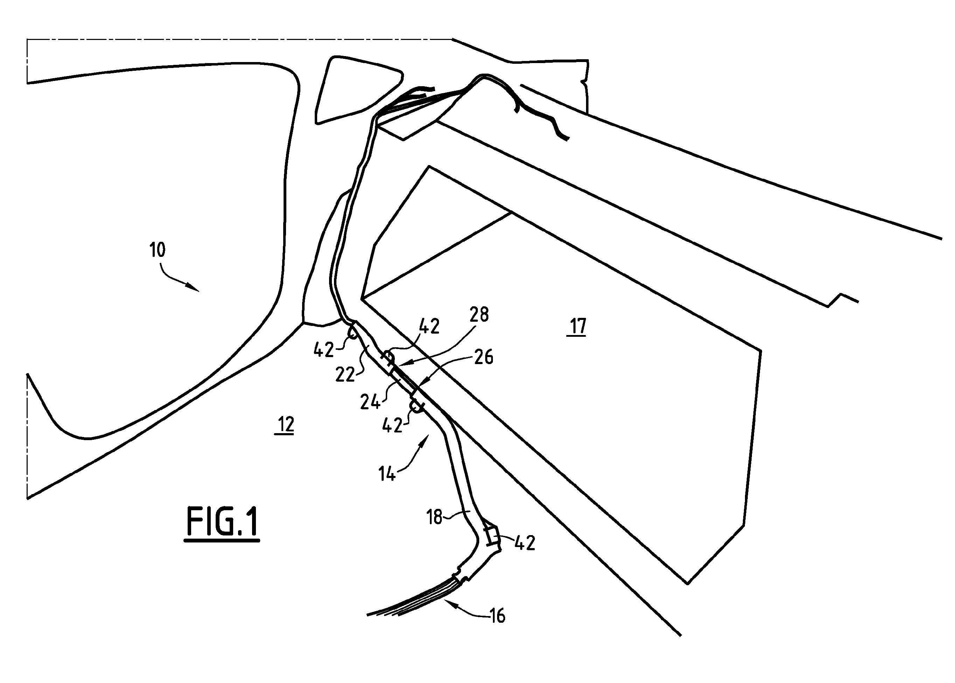

En référence à la figure 1, un véhicule automobile 10 comprend un plancher d'assise arrière 12 destiné à recevoir des sièges de passager.

Le véhicule automobile 10 comprend en outre une gouttière 14, rapportée et fixée sur le plancher d'assise arrière 12. Dans l'exemple illustré, la gouttière 14 guide un faisceau 16 de câbles coaxiaux entre un coffre 17 du véhicule et l'avant du véhicule.

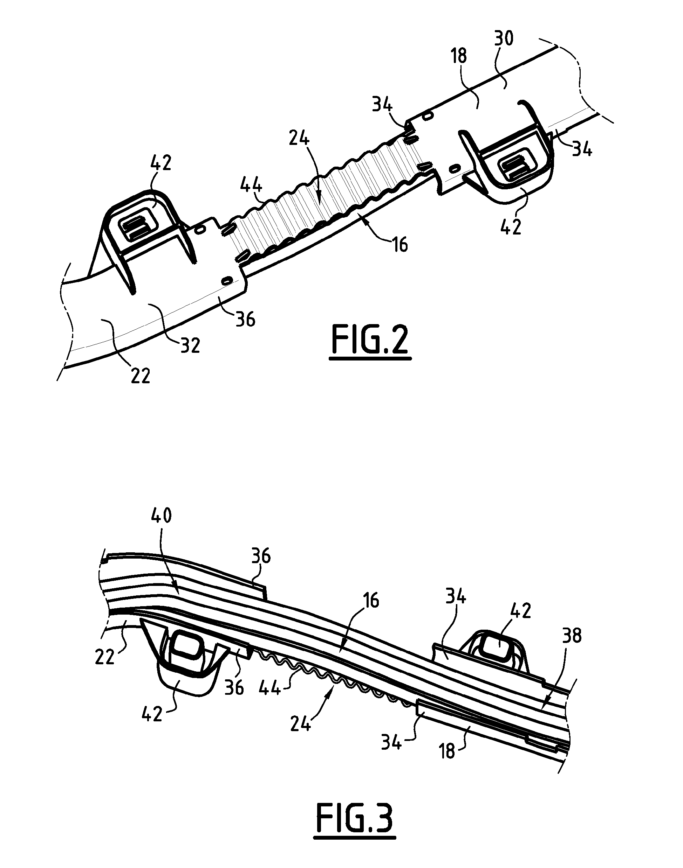

En référence aux figures 1 et 2, la gouttière 14 comprend un premier tronçon rigide 18 de gouttière, un second tronçon rigide 22 de gouttière, et un tronçon flexible 24 reliant une première extrémité 26 du premier tronçon rigide 18 avec une seconde extrémité 28 du second tronçon rigide 22.

Le terme « rigide » signifie que les tronçons 18, 22 sont cassants si ils sont fléchis suivant un rayon de courbure de 20 cm ou moins.

Le terme « flexible » signifie que la partie de liaison est capable d'être fléchie, sans casser, suivant un rayon de courbure de 5 cm ou moins.

Chaque tronçon rigide 18, 22 a un profil en coupe transversale en forme de U. Le tronçon 18, respectivement 22, comprend ainsi un fond 30, respectivement 32, et deux parois latérales 34, respectivement 36, s'étendant de part et d'autre du fond 30, respectivement 32. Chaque tronçon rigide 18, 22 comprend en outre un côté ouvert 38, respectivement 40, opposé au fond 30, respectivement 32, et délimité par les parois latérales 34, respectivement 36.

Comme cela est visible sur la figure 1, la gouttière 14 est rapportée avec le côté ouvert 38, 40 des tronçons rigides 18, 22 contre le plancher arrière 12. Ainsi, le faisceau de câbles 16 est entièrement entouré, d'une part, par la gouttière 14 et, d'autre part, par le plancher d'assise arrière 12.

Chaque tronçon rigide 18, 22 comprend en outre deux points de fixation 42, chacun situé une extrémité respective du tronçon à l'extérieur du passage de câble défini par les tronçons rigides 18, 22 et le tronçon flexible 24. Les points de fixation d'un même tronçon rigides sont fixés de chaque côté du tronçon rigide, sur une paroi latérale différente.

Dans l'exemple illustré, les points de fixation 42 comprennent une patte percée d'une ouverture, permettant la fixation par enclippage sur un pion (non représenté) prévu sur le plancher 12.

Le tronçon flexible 24 comprend une bande flexible 44 ondulée de sorte que le tronçon flexible 24 comprend un côté ouvert de manière à n'entourer que partiellement les câbles.

Les ondulations s'étendent dans le sens de la largeur de la bande flexible 44 (c'est-à-dire de 0 degrés par rapport à la longueur du tronçon flexible 24) et se succèdent dans le sens de la longueur dudit tronçon flexible. La bande flexible 44 est disposée, dans le sens de sa longueur entre la première extrémité 26 et la seconde extrémité 28 des tronçons rigides. La bande flexible 44 ondulée, prolonge les fonds des tronçons rigides 18, 22, afin que ces fonds se rejoignent. Ainsi, le faisceau de câbles 16 repose dans la continuité sur les fonds des tronçons rigides 18, 22 et sur la bande flexible 44.

Le tronçon flexible 24 définit une surface d'enveloppe 43 s'appuyant sur le tronçon flexible 24, le long de laquelle le câble est destiné à s'étendre. Dans l'exemple illustré, la surface d'enveloppe 43 s'appuie sur les sommets des ondulations.

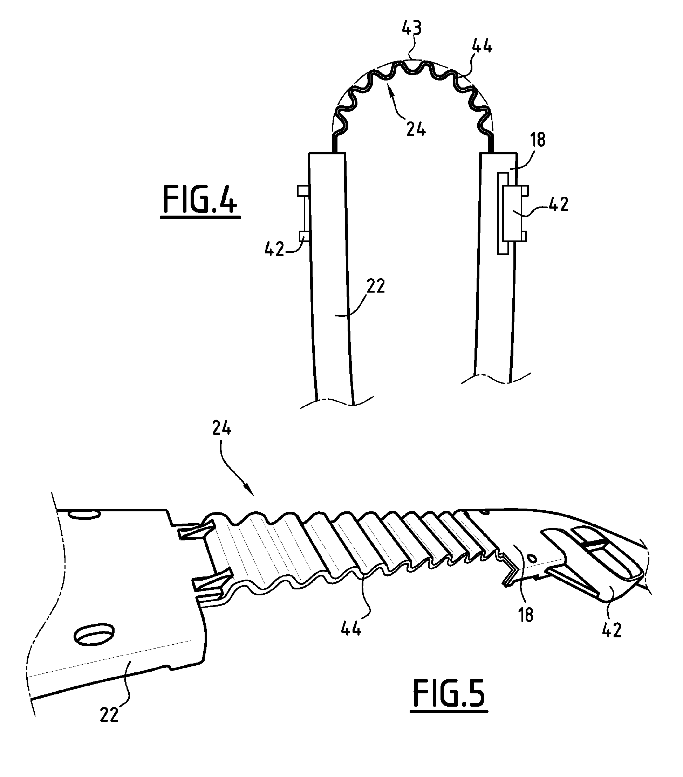

La partie de liaison 24 rend très aisé le transport de l'ensemble de la gouttière 14 et du faisceau de câbles 16 reçu dans cette gouttière. En effet, en référence à la figure 4, lors du transport, le premier tronçon rigide 18 est rapporté sur le second tronçon rigide 22, par exemple pour qu'ils soient globalement parallèle entre eux, en courbant la bande flexible 44 dans le sens de la largeur, c'est-à-dire celui des ondulations.

Lorsque le tronçon flexible 24 est ainsi incurvé pour replier les tronçons rigides 18, 22 l'un à côté de l'autre, le profil longitudinal de la surface d'enveloppe 43 est dénué de pliure localisée et reste sensiblement dans le prolongement des tronçons rigides 18, 22 au niveau des jonctions avec les tronçons rigides 18, 22.

En particulier, la présence des ondulations répartit la courbure de l'enveloppe de la bande sur toute sa longueur, ce qui évite un effet de pliage local trop important.

En outre, de préférence, le tronçon flexible 24 a une longueur telle que la longueur de câble entre la première extrémité 26 et la seconde extrémité 28 est d'au moins 4 cm. Ainsi, une grande longueur de faisceau de câbles 16 est également courbée, limitant encore le risque de détérioration des câbles.

L'ensemble de la gouttière 14 est en matière plastique.

Afin d'augmenter la flexibilité du tronçon flexible 24 par rapport au tronçon rigide 18, 22, l'aire de matériau de la section de la gouttière du tronçon flexible 24 est inférieure à l'aire de matériau de la section de la gouttière de chaque tronçon rigide 18, 22.

Le tronçon flexible 24 est venu de matière avec les tronçons rigides, en particulier avec les fonds 30, 32.

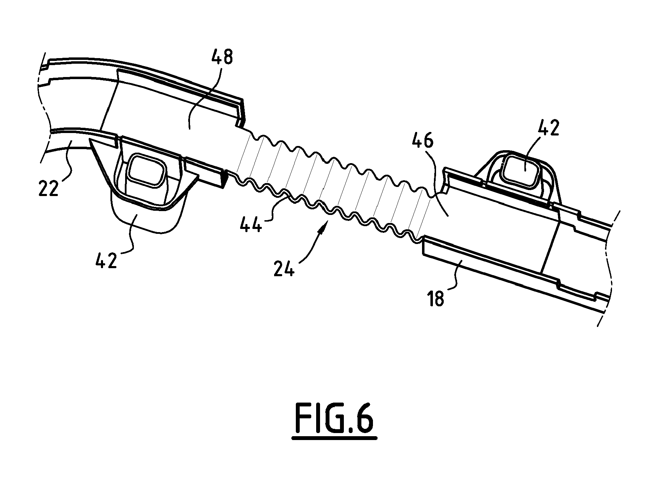

En variante, représentée sur les figures 5 et 6, la partie de liaison 24 est une pièce distincte 45 des tronçons rigides 18, 22, rapportée et fixée sur les tronçons rigides. Dans l'exemple illustré, cette pièce rapportée comprend la bande flexible 44 et, à chaque extrémité de la bande flexible, une doublure de gouttière 46, 48 s'insérant dans un tronçon rigide 18, 22 respectif. La pièce rapportée comprend en outre les fixations 42 proches des extrémités 26, 28, les fixations 42 étant venue de matière avec la doublure de gouttière 41, 48.

Ainsi, grâce à l'invention, il est possible de transporter, de manière compacte, à la fois la gouttière 14 avec le faisceau de câbles reçu à l'intérieur de la gouttière 14, en repliant les tronçons rigides 18, 22 l'un à côté de l'autre, avec un risque faible de détérioration des câbles.

La gouttière 14 est ensuite montée dans le véhicule par le procédé comprenant :
- le déploiement de la gouttière 14 depuis une position où les tronçons rigides 18, 22 repliés l'un sur l'autre, jusqu'à une position déployée,
- le positionnement de la gouttière 14 en position déployée sur le plancher d'assise arrière 12,
- la fixation de la gouttière positionnée, sur le plancher d'assise arrière 12.

## Revendications

1. Gouttière articulée de guidage de câbles, du type comprenant :
- un premier tronçon rigide de gouttière (18),
- un second tronçon rigide de gouttière (22),
- un tronçon flexible (24) reliant une première extrémité (26) du premier tronçon rigide (18) avec une seconde extrémité (28) du second tronçon rigide (22), le tronçon flexible (24) définissant une surface d'enveloppe (43) le long de laquelle le câble est destiné à s'étendre,
la gouttière étant **caractérisée en ce que,** lorsque le tronçon flexible (24) est incurvé pour replier les tronçons rigides (18, 22) l'un à côté de l'autre, le profil longitudinal de la surface d'enveloppe (43) est dénué de pliure localisée et reste sensiblement dans le prolongement des tronçons rigides (18, 22) au niveau des jonctions avec les tronçons rigides (18, 22).

2. Gouttière selon la revendication 1, **caractérisée en ce que,** au niveau des jonctions, l'aire de matériau de la section de la gouttière du tronçon flexible (24) est inférieure à l'aire de matériau de la section de la gouttière de chaque tronçon rigide (18, 22).

3. Gouttière selon l'une quelconque des revendications précédentes, **caractérisée en ce que** ledit tronçon flexible (24) est essentiellement constitué d'un matériau rigide.

4. Gouttière selon l'une quelconque des revendications précédentes, **caractérisée en ce que** le tronçon flexible (24) comprend un côté ouvert de manière à n'entourer que partiellement le câble.

5. Gouttière selon l'une quelconque des revendications précédentes, **caractérisée en ce que** le tronçon flexible (24) définit, sur toute sa longueur, une section transversale filiforme qui ne présente pas de rupture de ligne.

6. Gouttière selon l'une quelconque des revendications précédentes, **caractérisée en ce que** le tronçon flexible (24) est essentiellement constitué d'une bande flexible (44)

7. Gouttière selon l'une quelconque des revendications précédentes, **caractérisée en ce que** le tronçon flexible (24) comprend des ondulations.

8. Gouttière selon la revendication 7, **caractérisée en ce que** les ondulations sont inclinées, par rapport à la longueur du tronçon flexible.

9. Gouttière selon la revendication 8, **caractérisée en ce que** les ondulations se succèdent dans le sens de la longueur dudit tronçon flexible.

10. Gouttière selon l'une quelconque des revendications précédentes, **caractérisée en ce que**, lorsque le tronçon flexible (24) n'est pas fléchi, les tronçons rigides (18, 22) sont dans le prolongement l'un de l'autre.

11. Gouttière selon l'une quelconque des revendications précédentes, **caractérisée en ce que** le tronçon flexible (24) est venu de matière avec les premier et second tronçons rigides (18, 22).

12. Gouttière de câble selon l'une quelconque des revendications 1 à 10, **caractérisée en ce que** le tronçon flexible (24) est une pièce distincte (45) des premier et second tronçons rigides (18, 22), cette pièce distincte (45) étant rapportée et fixée sur les premier et second tronçons rigides (18, 22).

13. Gouttière selon l'une quelconque des revendications précédentes, **caractérisée en ce que** les premier et second tronçons rigides (18, 22) ont un profil en coupe transversale en forme de U.

14. Gouttière selon l'une quelconque des revendications précédentes, **caractérisé en ce que** les tronçons rigides (18, 22) ont chacun un côté ouvert.

15. Véhicule automobile **caractérisé en ce qu'**il comprend :
- une surface rigide, notamment un plancher d'assise arrière (12) destiné à recevoir des sièges arrière de passager,
- une gouttière (14) selon la revendication 14, rapportée et fixée sur ladite surface (12), avec le côté ouvert (30, 32) des tronçons rigides (18, 22) contre cette surface, et
- un faisceau de câbles (16) guidés par la gouttière (14).

16. Procédé de fixation d'une gouttière (14) selon l'une quelconque des revendications 1 à 14 sur un plancher d'assise arrière (12) d'un véhicule automobile, **caractérisé en ce qu'**il comprend :
- le déploiement de la gouttière (14) depuis une position où les tronçons rigides (18, 22) sont repliés l'un sur l'autre, jusqu'à une position déployée,
- le positionnement de la gouttière (14) en position déployée sur le plancher d'assise arrière (12),
- la fixation de la gouttière positionnée, sur le plancher d'assise arrière (12).

17. Procédé selon la revendication 16, **caractérisé en ce que** la fixation de la gouttière positionnée comprend la fixation des tronçons rigides (18, 22) en au moins deux points de fixation (42).

18. Procédé selon la revendication 16 ou 17, **caractérisé en ce que** la fixation de la gouttière (14) est réalisée à l'extérieur du passage du câble défini par les tronçons rigides (18, 22) et le tronçon flexible (24).
